# EUROPÄISCHE PATENTSCHRIFT

(11) **EP 3 256 829 B1**
(45) Veröffentlichungstag und Bekanntmachung des Hinweises auf die Patenterteilung: **18.12.2019**
(21) Anmeldenummer: 16708929.1
(22) Anmeldetag: 27.01.2016
(51) Int. Cl.: G01L 1/12, G01L 3/10

(54) **ANORDNUNG ZUR MESSUNG EINER KRAFT ODER EINES MOMENTES MIT MINDESTENS VIER MAGNETFELDSENSOREN**
DEVICE FOR MEASURING A FORCE OF A TORQUE HAVING AT LEAST FOUR MAGNETIC FIELD SENSORS
DISPOSITIF COMPORTENT DE MOINS QUATRE SONDES DE CHAMP MAGNÉTIQUES POUR MESURER UNE FORCE OU UN COUPLE

(30) Priorität: 09.02.2015 DE 102015202239
(43) Veröffentlichungstag der Anmeldung: 20.12.2017
(73) Patentinhaber: Schaeffler Technologies AG & Co. KG, 91074 Herzogenaurach (DE)
(72) Erfinder: NEUSCHAEFER-RUBE, Stephan, 91074 Herzogenaurach (DE); MATYSIK, Jan, 90480 Nürnberg (DE)
(86) Internationale Anmeldenummer: PCT/DE2016/200048
(87) Internationale Veröffentlichungsnummer: WO 2016/127987

(56) Entgegenhaltungen:
- EP-A1- 2 793 009
- EP-A1- 2 793 009
- EP-A1- 2 799 827
- EP-A1- 2 799 827

## Beschreibung

Die vorliegende Erfindung betrifft eine Anordnung zum Messen einer Kraft und/oder eines Momentes an einem sich in einer Achse erstreckenden Maschinenelement mit mindestens vier Magnetfeldsensoren unter Nutzung des invers-magnetostriktiven Effektes.

Aus der US 2012/0296577 A1 ist ein magnetoelastischer Kraftsensor bekannt, der zur Messung von Kräften an einem Element ausgebildet ist, welches umfänglich magnetisiert ist.

Die US 5,321,985 lehrt einen magnetostriktiven Drehmomentsensor, bei welchem eine magnetostriktive Schicht auf die äußere Oberfläche einer Welle aufgebracht ist und gegenüber von Anregungs- und Detektionsspulen positioniert ist. Ein auf die Welle wirkendes Drehmoment verursacht eine Materialspannung in der magnetostriktiven Schicht, wodurch sich deren relative magnetische Permeabilität richtungsabhängig ändert. Das aus der magnetostriktiven Schicht austretende magnetische Feld ist mit den Detektionsspulen messbar.

Die DE 699 36 138 T2 zeigt einen magnetischen Kraftsensor, bei welchem ein magnetisiertes Material einem Biegemoment ausgesetzt ist, wobei mithilfe einer Sensoranordnung das äußere Magnetfeld des magnetisierten Materials bestimmbar ist.

Aus der DE 603 09 678 T2 ist ein Verfahren zum Erfassen eines Drehmomentes in einer Welle bekannt, bei welchem Magnetfelder mit alternierender Polarität erzeugt werden, welche mit einer Sensoranordnung gemessen werden.

Die US 2007/0022809 A1 zeigt eine Vorrichtung zur Messung von Drehmomenten, bei welcher eine Schicht aus einem magnetostriktiven Material in einer Welle ausgebildet ist.

Aus der US 5,052,232 ist ein magnetoelastischer Drehmomentsensor bekannt, bei welchem ein Maschinenelement mit zwei umlaufenden magnetostriktiven Beschichtungen versehen ist.

Aus der DE 698 38 904 T2 ist ein Drehmomentsensor mit kreisförmiger Magnetisierung bekannt. Die Magnetisierung ist in einem ferromagnetischen, magnetostriktiven Material einer Welle ausgebildet und erstreckt sich kreisförmig um die Welle.

Aus der DE 692 22 588 T2 ist ein ringförmig magnetisierter Drehmomentsensor bekannt.

Die WO 2007/048143 A2 lehrt einen Sensor mit einem magnetisierten Schaft.

Die WO 01/27638 A1 zeigt einen Beschleunigungssensor mit einem Schaft, der umfänglich oder longitudinal magnetisiert ist.

Aus der WO 2006/053244 A2 ist ein Drehmomentsensor bekannt, der eine Magnetisierung an einem rotierenden Schaft umfasst. Die Magnetisierung ist umfänglich ausgebildet.

Die US 8,191,431 B2 zeigt eine Sensoranordnung mit einem magnetisierten Schaft.

Die EP 2 365 927 B1 zeigt ein Tretlager mit zwei Tretkurbeln und mit einem Kettenblattträger, der mit einer Welle des Tretlagers verbunden ist. Der Kettenblattträger ist drehfest mit einer Kettenblattwelle verbunden, die wiederum drehfest mit der Welle verbunden ist. Die Kettenblattwelle weist abschnittsweise eine Magnetisierung auf. Es ist ein Sensor vorgesehen, der eine Änderung der Magnetisierung bei einem im Bereich der Magnetisierung vorliegenden Drehmoment erfasst.

Die US 6,490,934 B2 lehrt einen magnetoelastischen Drehmomentsensor zur Messung eines Drehmomentes, welches auf ein Element mit einem ferromagnetischen, magnetostriktiven und magnetoelastisch aktiven Bereich wirkt. Dieser Bereich ist in einem Messwandler ausgebildet, der als zylindrische Hülse beispielsweise auf einer Welle sitzt. Der Drehmomentsensor steht dem Messwandler gegenüber.

Aus der EP 0 803 053 B1 ist ein Drehmomentsensor bekannt, der einen magnetoelastischen Messwandler umfasst. Der Messwandler sitzt als zylindrische Hülse auf einer Welle.

Die US 8,893,562 B2 lehrt ein Verfahren zum Erkennen eines magnetischen Störfeldes bei einer Drehmomentmessung an einer magnetoelastischen Welle. Es werden zwei Signale gemessen, wobei das zweite Signal dem magnetischen Störfeld entspricht und vom ersten Signal subtrahiert wird.

Die US 8,001,849 B2 zeigt eine Anordnung zur magnetoelastischen Drehmomentmessung, bei welcher die Wirkung von äußeren Magnetfeldern kompensiert sein soll. Die Anordnung umfasst einen magnetisierten Bereich einer Welle sowie mindestens einen passiven und einen aktiven Magnetfeldsensor. Die passiven Magnetfeldsensoren können beiderseits des magnetisierten Bereiches angeordnet sein.

Die US 2011/0162464 A1 zeigt eine Anordnung zur magnetoelastischen Drehmomentmessung, bei welcher die Wirkung von gleichförmigen und ungleichförmigen Magnetfeldern kompensiert sein soll. Die Anordnung umfasst einen magnetisierten Bereich einer Welle sowie mindestens drei Magnetfeldsensoren. Der zweite und der dritte Magnetfeldsensor können neben dem magnetisierten Bereich angeordnet sein.

Die US 8,087,304 B2 zeigt einen magnetoelastischen Drehmomentsensor zum Messen eines auf eine Welle wirkenden Drehmomentes. Die Welle weist eine oder mehrere umfängliche Magnetisierungen auf. Fig. 12 der US 8,087,304 B2 zeigt eine Ausführungsform mit nur einer umfänglichen Magnetisierung, wobei zwei primäre Magnetfeldsensoren im Bereich der Magnetisierung und zwei sekundäre Magnetfeldsensoren neben dem Bereich der Magnetisierung angeordnet sind. Fig. 18 der US 8,087,304 B2 zeigt eine Ausführungsform mit zwei umfänglichen Magnetisierungen, die abwechselnd polarisiert sind, wobei auch mehrere Magnetfeldsensoren an einem axialen Übergang zwischen den beiden Magnetisierungen angeordnet sind. Fig. 8 der

US 8,087,304 B2 zeigt eine Ausführungsform mit drei umfänglichen Magnetisierungen, die abwechselnd polarisiert sind, wobei jeweils ein Magnetfeldsensor in einem der Bereiche der drei Magnetisierungen angeordnet ist. Durch die besondere Anordnung der Magnetfeldsensoren soll der Einfluss von magnetischen Störfeldern aufgehoben werden. EP2 799 827 A1 und EP 2 793 009 A1 offenbaren Magnetfeldsensoranordnungen.

Die Aufgabe der vorliegenden Erfindung besteht ausgehend vom Stand der Technik darin, die Möglichkeiten zur Reduktion des Einflusses von magnetischen Störfeldern auf eine auf dem invers-magnetostriktiven Effekt beruhende Messung von Kräften und/oder Momenten zu erweitern.

Die genannte Aufgabe wird gelöst durch eine Anordnung gemäß dem beigefügten Anspruch 1.

Die erfindungsgemäße Anordnung dient zum Messen einer Kraft und/oder eines Momentes an einem sich in einer Achse erstreckenden Maschinenelement. Die Kraft bzw. das Moment wirkt auf das Maschinenelement, wodurch es zu mechanischen Spannungen kommt und sich das Maschinenelement zumeist geringfügig verformt. Die Achse bildet bevorzugt eine Rotationsachse des Maschinenelementes.

Das Maschinenelement ist hohl, da es einen sich zumindest teilweise in der Achse erstreckenden Hohlraum aufweist. Der Hohlraum ist insbesondere im Bereich der Achse ausgebildet. Bevorzugt erstreckt sich der Hohlraum über die gesamte axiale Länge des Maschinenelementes. Der Hohlraum ist bevorzugt an einem axialen Ende offen. Er weist bevorzugt die Form eines Zylinders auf.

Das Maschinenelement weist mindestens einen sich in einem axialen Abschnitt des Maschinenelementes umfänglich um die Achse herum erstreckenden Magnetisierungsbereich für eine im Maschinenelement ausgebildete Magnetisierung auf. Es handelt sich somit um mindestens einen die Achse umlaufenden Magnetisierungsbereich, wobei die Achse selbst bevorzugt nicht einen Teil des Magnetisierungsbereiches bildet. Der eine Magnetisierungsbereich bzw. die mehreren Magnetisierungsbereiche weisen eine tangentiale Ausrichtung in Bezug auf eine sich um die Achse herum erstreckende Oberfläche des Maschinenelementes auf. Der eine Magnetisierungsbereich bzw. die mehreren Magnetisierungsbereiche weisen bevorzugt ausschließlich eine tangentiale Ausrichtung in Bezug auf eine sich um die Achse herum erstreckende Oberfläche des Maschinenelementes auf. Der eine Magnetisierungsbereich bzw. die mehreren Magnetisierungsbereiche erstrecken sich bevorzugt jeweils entlang eines geschlossenen Pfades um die Achse herum, wobei der Magnetisierungsbereich bzw. die Magnetisierungsbereiche kurze Lücken aufweisen dürfen. Der eine Magnetisierungsbereich bzw. die mehreren Magnetisierungsbereiche bilden jeweils einen Primärsensor zur Bestimmung der Kraft bzw. des Momentes. Insofern mehrere der Magnetisierungsbereiche ausgebildet sind, weisen diese bevorzugt eine gleiche räumliche Ausdehnung auf und sind axial beabstandet.

Die Anordnung umfasst weiterhin mindestens einen ersten Magnetfeldsensor, einen zweiten Magnetfeldsensor, einen dritten Magnetfeldsensor und einen vierten Magnetfeldsensor, welche jeweils einen Sekundärsensor zur Bestimmung der Kraft bzw. des Momentes bilden. Der Primärsensor, d. h. der mindestens eine Magnetisierungsbereich dient zur Wandlung der zu messenden Kraft bzw. des zu messenden Momentes in ein entsprechendes Magnetfeld, während die Sekundärsensoren die Wandlung dieses Magnetfeldes in elektrische Signale ermöglichen. Der erste Magnetfeldsensor, der zweite Magnetfeldsensor, der dritte Magnetfeldsensor und der vierte Magnetfeldsensor sind jeweils zur einzelnen Messung einer axialen Richtungskomponente eines durch die Magnetisierung sowie durch die Kraft und/oder durch das Moment bewirkten Magnetfeldes ausgebildet. Das genannte Magnetfeld tritt aufgrund des invers-magnetostriktiven Effektes auf. Somit beruht die mit der erfindungsgemäßen Anordnung mögliche Messung auf dem invers-magnetostriktiven Effekt. Die genannte axiale Richtungskomponente weist eine Richtung parallel zur Achse auf.

Der erste Magnetfeldsensor, der zweite Magnetfeldsensor, der dritte Magnetfeldsensor und der vierte Magnetfeldsensor befinden sich gemeinsam in dem axialen Abschnitt des Magnetisierungsbereiches, insofern das Maschinenelement nur einen Magnetisierungsbereich aufweist. Der erste Magnetfeldsensor, der zweite Magnetfeldsensor, der dritte Magnetfeldsensor und der vierte Magnetfeldsensor befinden sich jeweils in einem der axialen Abschnitte der mehreren Magnetisierungsbereiche, insofern das Maschinenelement mehrere Magnetisierungsbereiche aufweist. Somit befinden sich an den axialen Positionen des ersten Magnetfeldsensors, des zweiten Magnetfeldsensors, des dritten Magnetfeldsensors und des vierten Magnetfeldsensors grundsätzlich einer der Magnetisierungsbereiche, wobei bevorzugt zwei der Magnetfeldsensoren gemeinsam in dem axialen Abschnitt eines der Magnetisierungsbereiche angeordnet sind.

Erfindungsgemäß sind zumindest der erste Magnetfeldsensor und der zweite Magnetfeldsensor in dem Hohlraum des Maschinenelementes angeordnet, sodass sie einer inneren Oberfläche des zugehörigen Magnetisierungsbereiches gegenüberstehen und für eine Messung der im Hohlraum des Maschinenelementes auftretenden axialen Richtungskomponente des durch die Magnetisierung sowie durch die Kraft und/oder durch das Moment bewirkten Magnetfeldes ausgebildet sind.

Ein besonderer Vorteil der erfindungsgemäßen Anordnung besteht darin, dass sie in unterschiedlichen Ausführungen eine sichere Reduktion des Einflusses von magnetischen Störfeldern auf die auf dem invers-magnetostriktiven Effekt beruhende Messung von Kräften und/oder Momenten erlaubt.

Der eine Magnetisierungsbereich bzw. die mehrere Magnetisierungsbereiche können permanent oder temporär magnetisiert sein. Bei bevorzugten Ausführungsformen der erfindungsgemäßen Anordnung ist der eine Magnetisierungsbereich bzw. sind die mehreren Magnetisierungsbereiche permanent magnetisiert, sodass die Magnetisierung durch eine Permanentmagnetisierung gebildet ist. Bei alternativ bevorzugten Ausführungsformen der erfindungsgemäßen Anordnung weist diese weiterhin mindestens einen Magnet zum Magnetisieren des mindestens einen Magnetisierungsbereiches auf, sodass die Magnetisierung des mindestens einen Magnetisierungsbereiches grundsätzlich temporär ist. Der mindestens eine Magnet kann durch einen Permanentmagneten oder bevorzugt durch einen Elektromagneten gebildet sein.

Der eine permanent oder temporär magnetisierte Magnetisierungsbereich bzw. die mehreren permanent oder temporär magnetisierten Magnetisierungsbereiche sind in einem von einer Kraft bzw. von einem Moment unbelasteten Zustand des Maschinenelementes nach außerhalb des jeweiligen Magnetisierungsbereiches bevorzugt magnetisch neutral, sodass kein technisch relevantes Magnetfeld außerhalb des jeweiligen Magnetisierungsbereiches messbar ist.

Der eine Magnetisierungsbereich bzw. die mehreren Magnetisierungsbereiche stellen jeweils einen Teil des Volumens des Maschinenelementes dar. Der eine Magnetisierungsbereich bzw. die mehreren Magnetisierungsbereiche sind bevorzugt jeweils ringförmig ausgebildet, wobei die Achse des Maschinenelementes auch eine mittlere Achse der jeweiligen Ringform bildet. Besonders bevorzugt weist der eine Magnetisierungsbereich bzw. weisen die mehreren Magnetisierungsbereiche jeweils die Form eines zur Achse des Maschinenelementes koaxialen Hohlzylinders auf.

Das Maschinenelement weist bevorzugt weiterhin magnetisch neutrale Bereiche auf, die jeweils axial zwischen den mehreren Magnetisierungsbereichen und/oder axial neben dem mindestens einen Magnetisierungsbereich des Maschinenelementes angeordnet sind. Die magnetisch neutralen Bereiche weisen weder eine Permanentmagnetisierung auf, noch ist die Anordnung dazu ausgebildet, die magnetisch neutralen Bereiche temporär zu magnetisieren. Selbstverständlich können ungewollte magnetische Störfelder zu einer temporären Magnetisierung der magnetisch neutralen Bereiche führen. Die magnetisch neutralen Bereiche sind bevorzugt nicht magnetisiert.

Der erste Magnetfeldsensor, der zweite Magnetfeldsensor, der dritte Magnetfeldsensor und der vierte Magnetfeldsensor sind bevorzugt gemeinsam in einer die Achse umfassenden Ebene angeordnet, um den Einfluss von magnetischen Störfeldern auf die auf dem invers-magnetostriktiven Effekt beruhende Messung von Kräften und/oder Momenten sicher minimieren zu können.

Bei bevorzugten Ausführungsformen der erfindungsgemäßen Anordnung sind der erste Magnetfeldsensor und der zweite Magnetfeldsensor bezogen auf die Achse gegenüberliegend angeordnet und weisen einen gleichen Abstand zur Achse auf. Somit schneidet die Achse eine den ersten Magnetfeldsensor und den zweiten Magnetfeldsensor verbindende Gerade in der Mitte zwischen dem ersten Magnetfeldsensor und dem zweiten Magnetfeldsensor. Der Abstand des ersten Magnetfeldsensors von der Achse und der Abstand des zweiten Magnetfeldsensors von der Achse sind bevorzugt jeweils gering; insbesondere kleiner als die Hälfte eines äußeren Radius des Maschinenelementes. Der Abstand des ersten Magnetfeldsensors von der Achse und der Abstand des zweiten Magnetfeldsensors von der Achse können auch Null sein.

Bei besonders bevorzugten Ausführungsformen der erfindungsgemäßen Anordnung sind der erste Magnetfeldsensor und der zweite Magnetfeldsensor unmittelbar benachbart beidseitig an der Achse angeordnet, sodass der Abstand des ersten Magnetfeldsensors zur Achse und der der Abstand des zweiten Magnetfeldsensors zur Achse technisch minimal sind. Bevorzugt sind der erste Magnetfeldsensor und der zweite Magnetfeldsensor auf einer Vorder- und Rückseite einer Platine angeordnet.

Bei bevorzugten Ausführungsformen der erfindungsgemäßen Anordnung sind der dritte Magnetfeldsensor und der vierte Magnetfeldsensor bezogen auf die Achse gegenüberliegend angeordnet und weisen einen gleichen Abstand zur Achse auf. Somit schneidet die Achse eine den dritten Magnetfeldsensor und den vierten Magnetfeldsensor verbindende Gerade in der Mitte zwischen dem dritten Magnetfeldsensor und dem vierten Magnetfeldsensor. Der Abstand des dritten Magnetfeldsensors von der Achse und der Abstand des vierten Magnetfeldsensors von der Achse sind erfindungsgemäß jeweils größer als der Abstand des ersten Magnetfeldsensors von der Achse und der Abstand des zweiten Magnetfeldsensors von der Achse. Der Abstand des dritten Magnetfeldsensors von der Achse und der Abstand des vierten Magnetfeldsensors von der Achse sind bevorzugt jeweils mehr als doppelt so groß wie der Abstand des ersten Magnetfeldsensors von der Achse und der Abstand des zweiten Magnetfeldsensors von der Achse. Daher handelt es sich bei dem ersten Magnetfeldsensor und bei dem zweiten Magnetfeldsensor bevorzugt um radial innenliegend angeordnete Magnetfeldsensoren, während es sich bei dem dritten Magnetfeldsensor und bei dem vierten Magnetfeldsensor bevorzugt um radial außenliegend angeordnete Magnetfeldsensoren handelt, wobei das Attribut "außenliegend" auf den Abstand zur Achse bezogen ist und keine Aussage über die Anordnung der Magnetfeldsensoren innerhalb oder außerhalb des Hohlraumes trifft. In jedem der axialen Abschnitte der Magnetisierungsbereiche gleicht die Anzahl der radial innenliegend angeordneten Magnetfeldsensoren bevorzugt der Anzahl der radial außenliegend angeordneten Magnetfeldsensoren.

Der dritte Magnetfeldsensor und der vierte Magnetfeldsensor sind bevorzugt an einer inneren Oberfläche oder an einer äußeren Oberfläche des Maschinenelementes angeordnet, wobei zwischen dem dritten Magnetfeldsensor und der inneren bzw. äußeren Oberfläche des Maschinenelementes ein Luftspalt ausgebildet ist, und wobei zwischen dem vierten Magnetfeldsensor und der inneren bzw. äußeren Oberfläche des Maschinenelementes ein Luftspalt ausgebildet ist. Die innere Oberfläche des Maschinenelementes ist in dessen Hohlraum ausgebildet. Die äußere Oberfläche des Maschinenelementes ist an dessen äußerer Form ausgebildet. Der Luftspalt ist bevorzugt kleiner als 5 mm; besonders bevorzugt kleiner als 1 mm. Die Luftspalte sind bevorzugt gleich groß.

Der dritte Magnetfeldsensor und der vierte Magnetfeldsensor können sowohl im Hohlraum des Maschinenelementes als auch außerhalb des hohlen Maschinenelementes angeordnet sein.

Bei einer weiteren bevorzugten Ausführungsform der erfindungsgemäßen Anordnung weist das Maschinenelement zwei der sich umfänglich um die Achse herum erstreckenden Magnetisierungsbereiche für eine Magnetisierung auf. Dabei sind der erste Magnetfeldsensor und der dritte Magnetfeldsensor an einer axialen Position des zweiten Magnetisierungsbereiches angeordnet, während der zweite Magnetfeldsensor und der vierte Magnetfeldsensor an einer axialen Position des ersten Magnetisierungsbereiches angeordnet sind. Auch bei dieser Ausführungsform sind der erste Magnetfeldsensor, der zweite Magnetfeldsensor, der dritte Magnetfeldsensor und der vierte Magnetfeldsensor bevorzugt gemeinsam in einer die Achse umfassenden Ebene angeordnet. Bei dieser Ausführungsform besitzen der erste Magnetisierungsbereich und der zweite Magnetisierungsbereich bevorzugt eine gleiche Polarität, d. h. einen gleichen Umlaufsinn. Die Ebene umfasst die Achse, da die Achse in der Ebene liegt.

Die vier Magnetfeldsensoren sind zur Bestimmung der zu messenden Kraft bzw. des zu messenden Momentes bevorzugt derart angeordnet und verschaltet, dass eine Differenz aus der Summe der mit dem ersten Magnetfeldsensor und mit dem zweiten Magnetfeldsensor messbaren axialen Richtungskomponenten und der Summe der mit dem dritten Magnetfeldsensor und mit dem vierten Magnetfeldsensor messbaren axialen Richtungskomponenten bestimmbar ist. Bei den genannten axialen Richtungskomponenten handelt es sich um die axialen Richtungskomponenten des durch die Magnetisierung sowie durch die Kraft und/oder durch das Moment bewirkten Magnetfeldes, denen ein magnetisches Störfeld überlagert sein kann. Die genannte Summen- und Differenzbildung kann beispielsweise dadurch realisiert sein, dass die einen Subtrahenden bildenden Magnetfeldsensoren entgegengesetzt zu den einen Minuenden bildenden Magnetfeldsensoren ausgerichtet sind. Die genannte Summen- und Differenzbildung kann aber auch dadurch realisiert sein, dass die Magnetfeldsensoren gleich ausgerichtet sind und aus deren Signalen eine Summe gebildet wird, wobei die einen Subtrahenden bildenden Magnetfeldsensoren umgekehrt gepolt sind.

Weitere bevorzugte Ausführungsformen der erfindungsgemäßen Anordnung umfassen zwei oder mehr der oben beschriebenen Quadrupel an Magnetfeldsensoren. Die Magnetfeldsensoren der weiteren Quadrupel befinden sich an den axialen Positionen weiterer der Magnetisierungsbereiche und unterscheiden sich bevorzugt lediglich in ihrer axialen Position vom ersten bis vierten Magnetfeldsensor.

Bei einer dieser weiteren bevorzugten Ausführungsformen umfasst das Maschinenelement zwei der sich umfänglich um die Achse herum erstreckenden Magnetisierungsbereiche für eine Magnetisierung. Ferner umfasst die Anordnung einen fünften Magnetfeldsensor, einen sechsten Magnetfeldsensor, einen siebenten Magnetfeldsensor und einen achten Magnetfeldsensor, welche jeweils zur einzelnen Messung einer axialen Richtungskomponente eines durch die Magnetisierung sowie durch die Kraft und/oder durch das Moment bewirkten Magnetfeldes ausgebildet sind. Der erste Magnetfeldsensor, der zweite Magnetfeldsensor, der dritte Magnetfeldsensor und der vierte Magnetfeldsensor sind an einer axialen Position des ersten Magnetisierungsbereiches angeordnet. Der fünfte Magnetfeldsensor, der sechste Magnetfeldsensor, der siebente Magnetfeldsensor und der achte Magnetfeldsensor sind an einer axialen Position des zweiten Magnetisierungsbereiches angeordnet. Der fünfte Magnetfeldsensor besitzt eine gleiche radiale Position und eine gleiche tangentiale Position wie der erste Magnetfeldsensor. Der sechste Magnetfeldsensor besitzt eine gleiche radiale Position und eine gleiche tangentiale Position wie der zweite Magnetfeldsensor. Der siebente Magnetfeldsensor besitzt eine gleiche radiale Position und eine gleiche tangentiale Position wie der dritte Magnetfeldsensor. Der achte Magnetfeldsensor besitzt eine gleiche radiale Position und eine gleiche tangentiale Position wie der vierte Magnetfeldsensor.

Bei dieser Ausführungsform sind die Magnetfeldsensoren bevorzugt derart angeordnet und verschaltet, dass eine erste Differenz aus der Summe der mit dem ersten Magnetfeldsensor und mit dem zweiten Magnetfeldsensor messbaren axialen Richtungskomponenten und der Summe der mit dem dritten Magnetfeldsensor und mit dem vierten Magnetfeldsensor messbaren axialen Richtungskomponenten bestimmbar ist. Entsprechend ist eine zweite Differenz aus der Summe der mit dem fünften Magnetfeldsensor und mit dem sechsten Magnetfeldsensor messbaren axialen Richtungskomponenten und der Summe der mit dem siebenten Magnetfeldsensor und mit dem achten Magnetfeldsensor messbaren axialen Richtungskomponenten bestimmbar.

Insofern der erste Magnetisierungsbereich und der zweite Magnetisierungsbereich eine gleiche Polarität, d. h. einen gleichen Umlaufsinn besitzen, ist bevorzugt eine Summe aus der ersten Differenz und der zweiten Differenz bestimmbar, um die zu messende Kraft bzw. das zu messende Moment zu bestimmen.

Insofern der erste Magnetisierungsbereich und der zweite Magnetisierungsbereich entgegengesetzte Polaritäten, d. h. einen umgekehrten Umlaufsinn besitzen, ist bevorzugt eine Differenz aus der ersten Differenz und der zweiten Differenz bestimmbar, um die zu messende Kraft bzw. das zu messende Moment zu bestimmen.

Entsprechend dem zweiten Magnetisierungsbereich und dem zweiten Quadrupel an Magnetfeldsensoren kann die erfindungsgemäße Anordnung weitere der Magnetisierungsbereiche und weitere der Quadrupel an Magnetfeldsensoren umfassen. So weist das Maschinenelement bei weiteren bevorzugten Ausführungsformen einen oder mehrere weitere der sich umfänglich um die Achse herum erstreckenden Magnetisierungsbereiche für eine Magnetisierung auf, an deren axialer Position jeweils weitere vier der Magnetfeldsensoren angeordnet sind. Die tangentialen Positionen und die radialen Positionen dieser weiteren vier Magnetfeldsensoren gleichen bevorzugt denen des ersten bis vierten Magnetfeldsensors. Die weiteren vier Magnetfeldsensoren sind bevorzugt wie der erste bis vierte Magnetfeldsensor verschaltetet und angeordnet, wodurch eine weitere Differenz bestimmbar ist. Die Polaritäten der weiteren Magnetisierungsbereiche können beliebig ausgewählt sein.

Der eine Magnetisierungsbereich bzw. die mehreren Magnetisierungsbereiche weisen bevorzugt jeweils eine hohe Magnetostriktivität auf.

Insofern mehrere der Magnetisierungsbereiche ausgebildet sind, so sind diese bevorzugt axial beabstandet zueinander angeordnet, wobei zwischen zwei benachbarten der Magnetisierungsbereiche jeweils einer der magnetisch neutralen Bereiche angeordnet ist. Insofern mehr als zwei der Magnetisierungsbereiche vorhanden sind, weisen diese bevorzugt jeweils den gleichen Abstand zueinander auf.

Das Maschinenelement weist bevorzugt die äußere Form eines Prismas oder eines Zylinders auf, wobei das Prisma bzw. der Zylinder koaxial zu der Achse angeordnet ist. Das Prisma bzw. der Zylinder ist bevorzugt gerade. Besonders bevorzugt weist das Maschinenelement die äußere Form eines geraden Kreiszylinders auf, wobei der Kreiszylinder koaxial zu der Achse angeordnet ist. Bei besonderen Ausführungsformen ist das Prisma bzw. der Zylinder konisch ausgebildet. Insofern sich der Hohlraum über die gesamte axiale Länge des Maschinenelementes erstreckt, besitzt es bevorzugt die Form eines Hohlzylinders.

Das Maschinenelement ist bevorzugt durch eine partiell hohle Welle, durch eine Hohlwelle, durch eine zumindest partiell hohle Schaltgabel oder durch einen Hohlflansch gebildet. Die partiell hohle Welle, die Hohlwelle, die partiell hohle Schaltgabel bzw. der Hohlflansch können für Belastungen durch unterschiedliche Kräfte und Momente ausgelegt sein und beispielsweise eine Komponente eines Sensortretlagers, eines Wankstabilisators oder eines Düngerstreuers sein. Grundsätzlich kann das Maschinenelement auch durch völlig andersartige Maschinenelementtypen gebildet sein.

Die mindestens vier Magnetfeldsensoren sind bevorzugt jeweils durch einen Halbleitersensor gebildet. Die mindestens vier Magnetfeldsensoren sind alternativ bevorzugt durch Hall-Sensoren, Spulen, Förstersonden oder Fluxgate-Magnetometer gebildet. Grundsätzlich können auch andere Sensortypen verwendet werden, insofern sie zur Messung einer axialen Richtungskomponente des durch den invers-magnetostriktiven Effekt hervorgerufenen magnetischen Feldes geeignet sind.

Weitere Einzelheiten, Vorteile und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1: eine erste bevorzugte Ausführungsform einer erfindungsgemäßen Anordnung mit vier Magnetfeldsensoren;
- Fig. 2: eine zweite bevorzugte Ausführungsform der erfindungsgemäßen Anordnung mit vier Magnetfeldsensoren;
- Fig. 3: eine dritte bevorzugte Ausführungsform der erfindungsgemäßen Anordnung mit vier Magnetfeldsensoren und zwei Magnetisierungsbereichen;
- Fig. 4: eine vierte bevorzugte Ausführungsform der erfindungsgemäßen Anordnung mit acht Magnetfeldsensoren und zwei Magnetisierungsbereichen; und
- Fig. 5: eine fünfte bevorzugte Ausführungsform der erfindungsgemäßen Anordnung mit acht Magnetfeldsensoren und zwei Magnetisierungsbereichen.

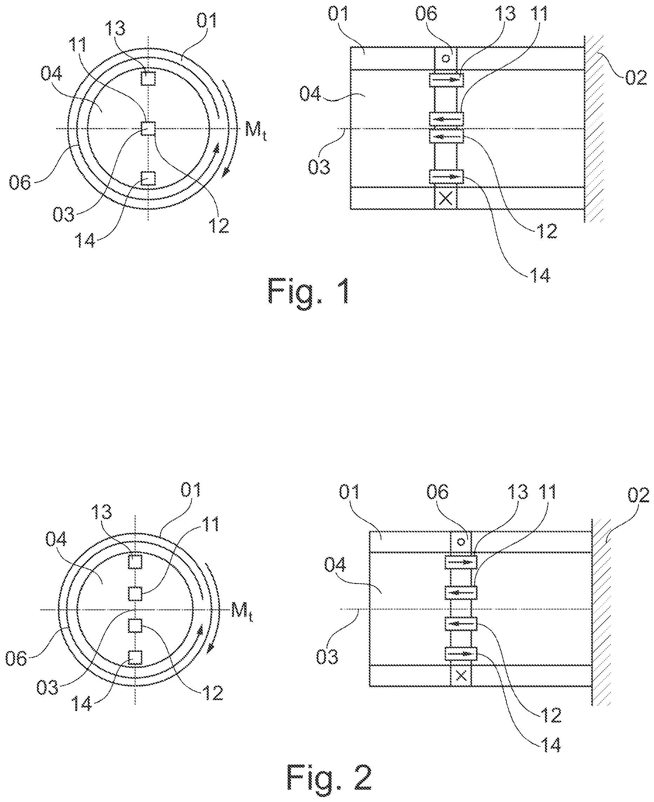

Fig. 1 bis Fig. 5 zeigen eine erfindungsgemäße Anordnung in jeweils zwei Ansichten. Die linken Teile der Figuren umfassen jeweils eine Querschnittsansicht, während die rechten Teile der Figuren jeweils eine Aufsicht der jeweiligen Ausführungsform der erfindungsgemäßen Anordnung umfassen.

Fig. 1 zeigt eine erste bevorzugte Ausführungsform der erfindungsgemäßen Anordnung. Die Anordnung umfasst zunächst ein Maschinenelement in Form eines Hohlflansches 01, welcher an einem Grundkörper 02 befestigt ist. Auf den Hohlflansch 01 wirkt eine Kraft oder ein Drehmoment, insbesondere ein Drehmoment Mt. Der Hohlflansch 01 weist die Form eines hohlen Kreiszylinders auf. Der Hohlflansch 01 erstreckt sich in einer Achse 03, welche auch die mittlere Achse der Hohlzylinderform des Hohlflansches 01 bildet. Im Inneren des Hohlflansches 01 ist ein zylinderförmiger Hohlraum 04 ausgebildet. Der Hohlflansch 01 besteht aus einem magnetoelastischen Material, welches den magnetostriktiven Effekt aufweist.

In einem axialen Abschnitt des Hohlflansches 01 ist ein erster Permanentmagnetisierungsbereich 06 ausgebildet, welcher sich umlaufend um die Achse 03 herum erstreckt, d. h. es handelt sich um eine zirkulare Permanentmagnetisierung.

Diese Ausführungsform der erfindungsgemäßen Anordnung umfasst weiterhin einen ersten Magnetfeldsensor 11, einen zweiten Magnetfeldsensor 12, einen dritten Magnetfeldsensor 13 und einen vierten Magnetfeldsensor 14. Die Magnetfeldsensoren 11, 12, 13, 14 sind jeweils zur einzelnen Messung einer axialen Richtungskomponente eines durch die Magnetisierung des Permanentmagnetisierungsbereiches 06 sowie durch die Kraft und/oder durch das Drehmoment bewirkten Magnetfeldes ausgebildet. Die Magnetfeldsensoren 11, 12, 13, 14 sind in einer Ebene angeordnet, welche auch die Achse 03 umfasst. Die Magnetfeldsensoren 11, 12, 13, 14 besitzen eine gleiche axiale Position, die innerhalb desjenigen axialen Abschnittes des Hohlflansches 01 liegt, in welchem der Permanentmagnetisierungsbereich 06 ausgebildet ist. Die Magnetfeldsensoren 11, 12, 13, 14 befinden sich im Hohlraum 04.

Der erste Magnetfeldsensor 11 und der zweite Magnetfeldsensor 12 sind an der Achse 03 angeordnet und befinden sich unmittelbar ober- und unterhalb der Achse 03. Der erste Magnetfeldsensor 11 und der zweite Magnetfeldsensor 12 sind insbesondere auf einer Oberseite und einer Unterseite einer Platine (nicht gezeigt) angeordnet. Der erste Magnetfeldsensor 11 und der zweite Magnetfeldsensor 12 weisen einen technisch minimalen Abstand zur Achse 03 auf, der bei diesen beiden Magnetfeldsensoren 11, 12 gleich ist.

Der dritte Magnetfeldsensor 13 und der vierte Magnetfeldsensor 14 sind an der inneren Oberfläche des Hohlflansches 01 angeordnet. Der dritte Magnetfeldsensor 13 und der vierte Magnetfeldsensor 14 weisen einen gleichen Abstand zur Achse 03 auf. Der erste Magnetfeldsensor 11 und der zweite Magnetfeldsensor 12 sind jeweils entgegengesetzt zum dritten Magnetfeldsensor 13 und zum vierten Magnetfeldsensor 14 gepolt.

Fig. 2 zeigt eine zweite bevorzugte Ausführungsform der erfindungsgemäßen Anordnung. Diese zweite Ausführungsform unterscheidet sich von der in Fig. 1 gezeigten Ausführungsform lediglich darin, dass der erste Magnetfeldsensor 11 und der zweite Magnetfeldsensor 12 nicht unmittelbar an der Achse 03 angeordnet sind, sondern einen geringen Abstand zur Achse 03 aufweisen.

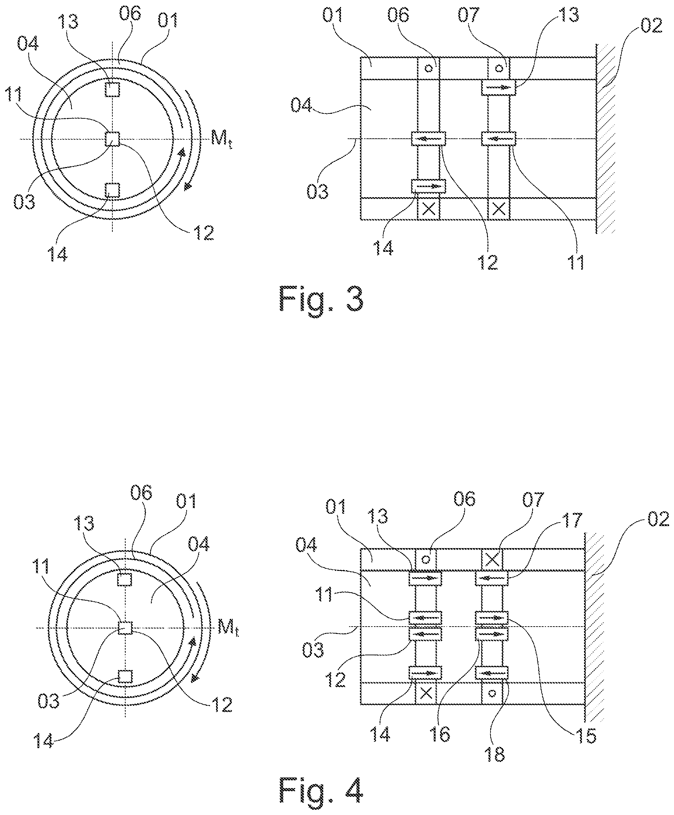

Fig. 3 zeigt eine dritte bevorzugte Ausführungsform der erfindungsgemäßen Anordnung. Diese dritte Ausführungsform unterscheidet sich von der in Fig. 1 gezeigten Ausführungsform lediglich in der Anzahl der Permanentmagnetisierungsbereiche und in der axialen Anordnung der Magnetfeldsensoren. Bei der in Fig. 3 gezeigten Ausführungsform weist der Hohlflansch 01 neben dem ersten Permanentmagnetisierungsbereich 06 einen zweiten Permanentmagnetisierungsbereich 07 auf, der sich in einem weiteren axialen Abschnitt des Hohlflansches 01 befindet und axial beabstandet vom ersten Permanentmagnetisierungsbereich 06 angeordnet ist. Im Übrigen gleichen sich der erste Permanentmagnetisierungsbereich 06 und der zweite Permanentmagnetisierungsbereich 07. Insbesondere weisen die beiden Permanentmagnetisierungsbereiche 06, 07 eine gleiche Polarität auf. Im Gegensatz zu der in Fig. 1 gezeigten Ausführungsform weisen der erste Magnetfeldsensor 11 und der dritte Magnetfeldsensor 13 eine abweichende axiale Position auf, da der erste Magnetfeldsensor 11 und der dritte Magnetfeldsensor 13 an einer axialen Position des zweiten Permanentmagnetisierungsbereiches 07 angeordnet sind.

Fig. 4 zeigt eine vierte bevorzugte Ausführungsform der erfindungsgemäßen Anordnung. Diese vierte Ausführungsform unterscheidet sich von der in Fig. 1 gezeigten Ausführungsform lediglich in der Anzahl der Permanentmagnetisierungsbereiche und in der Anzahl der Magnetfeldsensoren. Bei der in Fig. 4 gezeigten Ausführungsform weist der Hohlflansch 01 neben dem ersten Permanentmagnetisierungsbereich 06 einen zweiten Permanentmagnetisierungsbereich 07 auf, der sich in einem weiteren axialen Abschnitt des Hohlflansches 01 befindet und axial beabstandet vom ersten Permanentmagnetisierungsbereich 06 angeordnet ist. Im Übrigen gleichen sich der erste Permanentmagnetisierungsbereich 06 und der zweite Permanentmagnetisierungsbereich 07, jedoch weisen die beiden Permanentmagnetisierungsbereiche 06, 07 unterschiedliche Polaritäten auf.

Die in Fig. 4 gezeigte Ausführungsform weist weiterhin einen fünften Magnetfeldsensor 15, einen sechsten Magnetfeldsensor 16, einen siebenten Magnetfeldsensor 17 und einen achten Magnetfeldsensor 18 auf, die hinsichtlich ihrer Ausführung sowie ihrer radialen und tangentialen Position dem ersten Magnetfeldsensor 11, dem zweiten Magnetfeldsensor 12, dem dritten Magnetfeldsensor 13 und dem vierten Magnetfeldsensor 14 gleichen. Jedoch besitzen der fünfte Magnetfeldsensor 15, der sechste Magnetfeldsensor 16, der siebente Magnetfeldsensor 17 und der achte Magnetfeldsensor 18 eine axiale Position des zweiten Permanentmagnetisierungsbereiches 07.

Da die beiden Permanentmagnetisierungsbereiche 06, 07 unterschiedliche Polaritäten aufweisen, sind der fünfte Magnetfeldsensor 15 und der sechste Magnetfeldsensor 16 jeweils entgegengesetzt zum ersten Magnetfeldsensor 11 und zum zweiten Magnetfeldsensor 12 gepolt. Ebenso sind der siebente Magnetfeldsensor 17 und der achte Magnetfeldsensor 18 jeweils entgegengesetzt zum dritten Magnetfeldsensor 13 und zum vierten Magnetfeldsensor 14 gepolt.

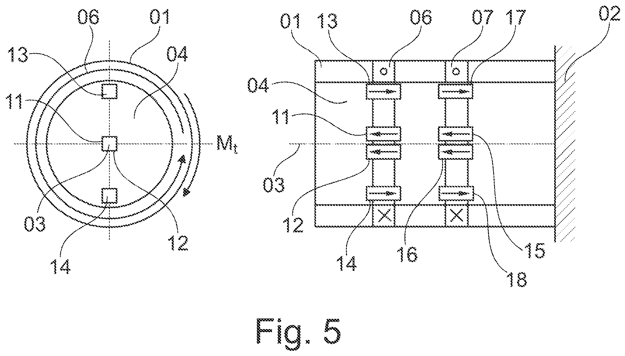

Fig. 5 zeigt eine fünfte bevorzugte Ausführungsform der erfindungsgemäßen Anordnung. Diese fünfte Ausführungsform unterscheidet sich von der in Fig. 4 gezeigten Ausführungsform lediglich in der Polarität der Permanentmagnetisierungsbereiche und in der Polung der Magnetfeldsensoren. Bei der in Fig. 5 gezeigten Ausführungsform weisen der erste Permanentmagnetisierungsbereich 06 und der zweite Permanentmagnetisierungsbereich 07 eine gleiche Polarität auf. Aus diesem Grund sind der fünfte Magnetfeldsensor 15 und der sechste Magnetfeldsensor 16 wie der erste Magnetfeldsensor 11 und der zweite Magnetfeldsensor 12 gepolt. Ebenso sind der siebente Magnetfeldsensor 17 und der achte Magnetfeldsensor 18 wie der dritte Magnetfeldsensor 13 und der vierte Magnetfeldsensor 14 gepolt.

### Bezugszeichenliste

- 01: Hohlflansch
- 02: Grundkörper
- 03: Achse
- 04: Hohlraum
- 05: -
- 06: erster Permanentmagnetisierungsbereich
- 07: zweiter Permanentmagnetisierungsbereich
- 08: -
- 09: -
- 11: erster Magnetfeldsensor
- 12: zweiter Magnetfeldsensor
- 13: dritter Magnetfeldsensor
- 14: vierter Magnetfeldsensor
- 15: fünfter Magnetfeldsensor
- 16: sechser Magnetfeldsensor
- 17: siebenter Magnetfeldsensor
- 18: achter Magnetfeldsensor

## Patentansprüche

1. Anordnung zum Messen einer Kraft und/oder eines Momentes (Mt) an einem sich in einer Achse (03) erstreckenden Maschinenelement (01), welches einen sich in der Achse (03) erstreckenden Hohlraum (04) und mindestens einen sich in einem axialen Abschnitt des Maschinenelementes (01) umfänglich um die Achse (03) herum erstreckenden Magnetisierungsbereich (06, 07) für eine Magnetisierung aufweist;
wobei die Anordnung weiterhin mindestens einen ersten Magnetfeldsensor (11), einen zweiten Magnetfeldsensor (12), einen dritten Magnetfeldsensor (13) und einen vierten Magnetfeldsensor (14) umfasst, welche jeweils zur einzelnen Messung einer axialen Richtungskomponente eines durch die Magnetisierung sowie durch die Kraft und/oder durch das Moment (Mt) bewirkten Magnetfeldes ausgebildet sind und sich jeweils in dem axialen Abschnitt des einen Magnetisierungsbereiches (06) oder in einem der axialen Abschnitte der mehreren Magnetisierungsbereiche (06, 07) befinden;
wobei zumindest der erste Magnetfeldsensor (11) und der zweite Magnetfeldsensor (12) in dem Hohlraum (04) des Maschinenelementes (01) angeordnet sind,
**dadurch gekennzeichnet, dass** der dritte Magnetfeldsensor (13) und der vierte Magnetfeldsensor (14) einen größeren Abstand zur Achse (03) als der erste Magnetfeldsensor (11) und der zweite Magnetfeldsensor (12) aufweisen.

2. Anordnung nach Anspruch 1, wobei der erste Magnetfeldsensor (11) und der zweite Magnetfeldsensor (12) unmittelbar an der Achse (03) oder auf der Achse (03) oder in einem geringen Abstand von der Achse (03), insbesondere kleiner als die Hälfte eines äußeren Radius des Maschinenelementes (01), angeordnet sind.

3. Anordnung nach Anspruch 1 oder 2, **dadurch gekennzeichnet, dass** der erste Magnetfeldsensor (11), der zweite Magnetfeldsensor (12), der dritte Magnetfeldsensor (13) und der vierte Magnetfeldsensor (14) in einer die Achse (03) umfassenden Ebene angeordnet sind.

4. Anordnung nach einem der Ansprüche 1 bis 3, **dadurch gekennzeichnet, dass** der erste Magnetfeldsensor (11) und der zweite Magnetfeldsensor (12) bezogen auf die Achse (03) gegenüberliegend angeordnet sind und einen gleichen Abstand zur Achse (03) aufweisen.

5. Anordnung nach einem der Ansprüche 1 bis 4, **dadurch gekennzeichnet, dass** der erste Magnetfeldsensor (11) und der zweite Magnetfeldsensor (12) unmittelbar benachbart beidseitig an der Achse (03) angeordnet sind.

6. Anordnung nach einem der Ansprüche 1 bis 5, **dadurch gekennzeichnet, dass** der dritte Magnetfeldsensor (13) und der vierte Magnetfeldsensor (14) bezogen auf die Achse (03) gegenüberliegend angeordnet sind und einen gleichen Abstand zur Achse (03) aufweisen.

7. Anordnung nach einem der Ansprüche 1 bis 6, **dadurch gekennzeichnet, dass** der dritte Magnetfeldsensor (13) und der vierte Magnetfeldsensor (14) an einer inneren oder äußeren Oberfläche des Maschinenelementes (01) angeordnet sind, wobei zwischen dem dritten Magnetfeldsensor (13) und der inneren oder äußeren Oberfläche des Maschinenelementes (01) ein Luftspalt ausgebildet ist, und wobei zwischen dem vierten Magnetfeldsensor (14) und der inneren oder äußeren Oberfläche des Maschinenelementes (01) ein Luftspalt ausgebildet ist.

8. Anordnung nach einem der Ansprüche 1 bis 7, **dadurch gekennzeichnet, dass** das Maschinenelement (01) zwei der sich umfänglich um die Achse (03) herum erstreckenden Magnetisierungsbereiche (06, 07) für eine Magnetisierung aufweist, wobei der erste Magnetfeldsensor (11) und der dritte Magnetfeldsensor (13) an einer axialen Position des zweiten Magnetisierungsbereiches (07) angeordnet sind, und wobei der zweite Magnetfeldsensor (12) und der vierte Magnetfeldsensor (14) an einer axialen Position des ersten Magnetisierungsbereiches (06) angeordnet sind.

9. Anordnung nach einem der Ansprüche 1 bis 8, **dadurch gekennzeichnet, dass** die Magnetfeldsensoren (11, 12, 13, 14) derart angeordnet und verschaltet sind, dass eine Differenz aus der Summe der mit dem ersten Magnetfeldsensor (11) und mit dem zweiten Magnetfeldsensor (12) messbaren axialen Richtungskomponenten und der Summe der mit dem dritten Magnetfeldsensor (13) und mit dem vierten Magnetfeldsensor (14) messbaren axialen Richtungskomponenten bestimmbar ist.

10. Anordnung nach einem der Ansprüche 1 bis 7 und 9, **dadurch gekennzeichnet, dass** das Maschinenelement (01) zwei der sich umfänglich um die Achse (03) herum erstreckenden Magnetisierungsbereiche (06, 07) für eine Magnetisierung aufweist; und dass die Anordnung einen fünften Magnetfeldsensor (15), einen sechsten Magnetfeldsensor (16), einen siebenten Magnetfeldsensor (17) und einen achten Magnetfeldsensor (18) aufweist; wobei der erste Magnetfeldsensor (11), der zweite Magnetfeldsensor (12), der dritte Magnetfeldsensor (13) und der vierte Magnetfeldsensor (14) an einer axialen Position des ersten Magnetisierungsbereiches (06) angeordnet sind; wobei der fünfte Magnetfeldsensor (15), der sechste Magnetfeldsensor (16), der siebente Magnetfeldsensor (17) und der achte Magnetfeldsensor (18) an einer axialen Position des zweiten Magnetisierungsbereiches (07) angeordnet sind; wobei der fünfte Magnetfeldsensor (15) eine gleiche radiale Position und eine gleiche tangentiale Position wie der erste Magnetfeldsensor (01) besitzt; wobei der sechste Magnetfeldsensor (16) eine gleiche radiale Position und eine gleiche tangentiale Position wie der zweite Magnetfeldsensor (12) besitzt; wobei der siebente Magnetfeldsensor (17) eine gleiche radiale Position und eine gleiche tangentiale Position wie der dritte Magnetfeldsensor (13) besitzt; und wobei der achte Magnetfeldsensor (18) eine gleiche radiale Position und eine gleiche tangentiale Position wie der vierte Magnetfeldsensor (14) besitzt.

## Claims

1. Arrangement for measuring a force and/or a torque (Mₜ) on a machine element (01) which extends in an axis (03), which has a cavity (04) extending in the axis (03) and has at least one magnetization region (06, 07) extending circumferentially around the axis (03) in an axial section of the machine element (01) for magnetization;
wherein the arrangement further comprises at least a first magnetic field sensor (11), a second magnetic field sensor (12), a third magnetic field sensor (13) and a fourth magnetic field sensor (14), which are each designed for the individual measurement of an axial directional component of a magnetic field effected by the magnetization and by the force and/or by the torque (Mt) and are each located in the axial section of the one magnetization region (06) or in one of the axial sections of the multiple magnetization regions (06, 07);
wherein at least the first magnetic field sensor (11) and the second magnetic field sensor (12) are arranged in the cavity (04) of the machine element (01),
**characterized in that**
the third magnetic field sensor (13) and the fourth magnetic field sensor (14) are at a greater distance from the axis (03) than the first magnetic field sensor (11) and the second magnetic field sensor (12).

2. Arrangement according to Claim 1, wherein the first magnetic field sensor (11) and the second magnetic field sensor (12) are arranged directly by the axis (03) or on the axis (03) or at a short distance from the axis (03), in particular less than half an external radius of the machine element (01).

3. Arrangement according to Claim 1 or 2,
**characterized in that** the first magnetic field sensor (11), the second magnetic field sensor (12), the third magnetic field sensor (13) and the fourth magnetic field sensor (14) are arranged on a plane encompassing the axis (03).

4. Arrangement according to one of Claims 1 to 3,
**characterized in that** the first magnetic field sensor (11) and the second magnetic field sensor (12) are arranged opposite each other relative to the axis (03) and at the same distance from the axis (03).

5. Arrangement according to one of Claims 1 to 4,
**characterized in that** the first magnetic field sensor (11) and the second magnetic field sensor (12) are arranged directly adjacent to and on both sides of the axis (03).

6. Arrangement according to one of Claims 1 to 5,
**characterized in that** the third magnetic field sensor (13) and the fourth magnetic field sensor (14) are arranged opposite each other relative to the axis (03) and at the same distance from the axis (03).

7. Arrangement according to one of Claims 1 to 6,
**characterized in that** the third magnetic field sensor (13) and the fourth magnetic field sensor (14) are arranged on an inner or outer surface of the machine element (01), wherein an air gap is formed between the third magnetic field sensor (13) and the inner or outer surface of the machine element (01), and wherein an air gap is formed between the fourth magnetic field sensor (14) and the inner or outer surface of the machine element (01) .

8. Arrangement according to one of Claims 1 to 7,
**characterized in that** the machine element (01) has two magnetization regions (06, 07) extending circumferentially around the axis (03) for magnetization, wherein the first magnetic field sensor (11) and the third magnetic field sensor (13) are arranged at an axial position of the second magnetization region (07), and wherein the second magnetic field sensor (12) and the fourth magnetic field sensor (14) are arranged at an axial position of the first magnetization region (06) .

9. Arrangement according to one of Claims 1 to 8,
**characterized in that** the magnetic field sensors (11, 12, 13, 14) are arranged and wired in such a way that a difference of the sum of the axial directional components measurable with the first magnetic field sensor (11) and with the second magnetic field sensor (12) and the sum of the axial directional components measurable with the third magnetic field sensor (13) and with the fourth magnetic field sensor (14) can be determined.

10. Arrangement according to one of Claims 1 to 7 and 9, **characterized in that** the machine element (01) has two magnetization regions (06, 07) extending circumferentially around the axis (03) for magnetization; and **in that** the arrangement has a fifth magnetic field sensor (15), a sixth magnetic field sensor (16), a seventh magnetic field sensor (17) and an eighth magnetic field sensor (18); wherein the first magnetic field sensor (11), the second magnetic field sensor (12), the third magnetic field sensor (13) and the fourth magnetic field sensor (14) are arranged at an axial position of the first magnetization region (06); wherein the fifth magnetic field sensor (15), the sixth magnetic field sensor (16), the seventh magnetic field sensor (17) and the eighth magnetic field sensor (18) are arranged at an axial position of the second magnetization region (07); wherein the fifth magnetic field sensor (15) has an identical radial position and an identical tangential position to the first magnetic field sensor (01); wherein the sixth magnetic field sensor (16) has an identical radial position and an identical tangential position to the second magnetic field sensor (12); wherein the seventh magnetic field sensor (17) has an identical radial position and an identical tangential position to the third magnetic field sensor (13); and wherein the eighth magnetic field sensor (18) has an identical radial position and an identical tangential position to the fourth magnetic field sensor (14).

## Revendications

1. Ensemble permettant de mesurer une force et/ou un moment (Mₜ) au niveau d'un organe de machine (01) s'étendant sur un axe (03), lequel présente une cavité (04) s'étendant sur l'axe (03) et au moins une zone d'aimantation (06, 07) destinée à une aimantation, qui s'étend en périphérie autour de l'axe (03) dans une partie axiale de l'organe de machine (01) ;
dans lequel ledit ensemble comprend en outre au moins un premier capteur de champ magnétique (11), un deuxième capteur de champ magnétique (12), un troisième capteur de champ magnétique (13) et un quatrième capteur de champ magnétique (14) qui sont conçus chacun pour mesurer individuellement une composante de direction axiale d'un champ magnétique induit par l'aimantation et par la force et/ou le moment (Mₜ) et qui se situent chacun dans la partie axiale de ladite une région d'aimantation (06) ou dans une partie axiale desdites plusieurs zones d'aimantation (06, 07) ;
dans lequel au moins le premier capteur de champ magnétique (11) et le deuxième capteur de champ magnétique (12) sont disposés dans la cavité (04) de l'organe de machine (01),
**caractérisé en ce que** le troisième capteur de champ magnétique (13) et le quatrième capteur de champ magnétique (14) présentent une distance à l'axe (03) supérieure à celle du premier capteur de champ magnétique (11) et du deuxième capteur de champ magnétique (12).

2. Ensemble selon la revendication 1, dans lequel le premier capteur de champ magnétique (11) et le deuxième capteur de champ magnétique (12) sont disposés directement au niveau de l'axe (03) ou sur l'axe (03) ou à une faible distance de l'axe (03), en particulier à moins de la moitié d'un rayon extérieur de l'organe de machine (01).

3. Ensemble selon la revendication 1 ou 2, **caractérisé en ce que** le premier capteur de champ magnétique (11), le deuxième capteur de champ magnétique (12), le troisième capteur de champ magnétique (13) et le quatrième capteur de champ magnétique (14) sont disposés dans un plan qui comprend l'axe (03).

4. Ensemble selon l'une des revendications 1 à 3, **caractérisé en ce que** le premier capteur de champ magnétique (11) et le deuxième capteur de champ magnétique (12) sont disposés l'un en face de l'autre par rapport à l'axe (03) et présentent les mêmes distances à l'axe (03).

5. Ensemble selon l'une des revendications 1 à 4, **caractérisé en ce que** le premier capteur de champ magnétique (11) et le deuxième capteur de champ magnétique (12) sont disposés de manière adjacente de chaque côté de l'axe (03).

6. Ensemble selon l'une des revendications 1 à 5, **caractérisé en ce que** le troisième capteur de champ magnétique (13) et le quatrième capteur de champ magnétique (14) sont disposés l'un en face de l'autre par rapport à l'axe (03) et présentent les mêmes distances à l'axe (03).

7. Ensemble selon l'une des revendications 1 à 6, **caractérisé en ce que** le troisième capteur de champ magnétique (13) et le quatrième capteur de champ magnétique (14) sont disposés sur une surface intérieure ou extérieure de l'organe machine (01), dans lequel un entrefer est formé entre le troisième capteur de champ magnétique (13) et la surface intérieure ou extérieure de l'organe de machine (01), et dans lequel un entrefer est formé entre le quatrième capteur de champ magnétique (14) et la surface intérieure ou extérieure de l'organe de machine (01).

8. Ensemble selon l'une des revendications 1 à 7, **caractérisé en ce que** l'organe de machine (01) comprend deux des zones d'aimantation (06, 07) destinées à une aimantation, qui s'étendent en périphérie autour de l'axe (03), dans lequel le premier capteur de champ magnétique (11) et le troisième capteur de champ magnétique (13) sont disposés à une position axiale de la deuxième zone d'aimantation (07), et dans lequel le deuxième capteur de champ magnétique (12) et le quatrième capteur de champ magnétique (14) sont disposés à une position axiale de la première zone d'aimantation (06).

9. Ensemble selon l'une des revendications 1 à 8, **caractérisé en ce que** les capteurs de champ magnétique (11, 12, 13, 14) sont disposés et connectés de telle manière qu'une différence peut être déterminée entre la somme des composantes de direction axiale mesurables au moyen du premier capteur (11) et du deuxième capteur (12) et la somme des composantes de direction axiale mesurables au moyen du troisième capteur de champ magnétique (13) et du quatrième capteur de champ magnétique (14).

10. Ensemble selon l'une des revendications 1 à 7 et 9, **caractérisé en ce que** l'organe de machine (01) comporte deux des zones d'aimantation (06, 07) s'étendant en périphérie autour de l'axe (03) ; et **en ce que** l'ensemble comporte un cinquième capteur de champ magnétique (15), un sixième capteur de champ magnétique (16), un septième capteur de champ magnétique (17) et un huitième capteur de champ magnétique (18) ; dans lequel le premier capteur de champ magnétique (11), le deuxième capteur de champ magnétique (12), le troisième capteur de champ magnétique (13) et le quatrième capteur de champ magnétique (14) sont disposés à une position axiale de la première zone d'aimantation (06) ; dans lequel le cinquième capteur de champ magnétique (15), le sixième capteur de champ magnétique (16), le septième capteur de champ magnétique (17) et le huitième capteur de champ magnétique (18) sont disposés à une position axiale de la deuxième zone d'aimantation (07) ; dans lequel le cinquième capteur de champ magnétique (15) présente une même position radiale et une même position tangentielle que le premier capteur de champ magnétique (01) ; dans lequel le sixième capteur de champ magnétique (16) présente une même position radiale et une même position tangentielle que le deuxième capteur de champ magnétique (12) ; dans lequel le septième capteur de champ magnétique (17) présente une même position radiale et une même position tangentielle que le troisième capteur de champ magnétique (13) ; et dans lequel le huitième capteur de champ magnétique (18) présente une même position radiale et une même position tangentielle que le quatrième capteur de champ magnétique (14).
